# EUROPEAN PATENT APPLICATION

(11) **EP 2 282 087 A2**
(43) Date of publication of application: **09.02.2011**
(21) Application number: 09179542.7
(22) Date of filing: 17.12.2009
(51) Int. Cl.: F16K 5/02

(54) **Gas valve**

(30) Priority: 07.08.2009 TR 200906153
(71) Applicant: Turas Gaz Armatürleri Sanayi. Ve Ticaret A.S., 5003 Sokak (TR)
(72) Inventor: Demirezen, Mehmet, 34590, istanbul (TR); Gün, Isa, 34590, istanbul (TR); Avci, Murat, 34590, istanbul (TR); Turhan, Gökhan, 34590, istanbul (TR)

(57) **Abstract**

The invention relates to a plug inside a gas valve which opens and closes gas transition in furnaces and its igniting and regulates the gas quantity. The objective of the plug (2) inside the gas valve centre is to regulate gas transition quantity; the gas quantity can be low or high. In today's technology, the plug (2) makes from brass or aluminum by machining. However, in present days, it is possible to make from plastic with plastic injection and other plastic manufacturing (sintering) methods by means of plastic technology improvement and some design changes.

## Description

### TECHNICAL FIELD

The invention relates to a plug inside a gas valve which opens and closes gas transition in furnaces and its igniting and regulates the gas quantity. The objective of the plug inside the gas valve centre is to regulate gas transition quantity; the gas quantity can be low or high. In today's technology, the plug makes from brass or aluminum by machining. However, in present days, it is possible to make from plastic with plastic injection and other plastic manufacturing (sintering) methods by means of plastic technology improvement and some design changes.

These types of valves work with trouble, failures and deformations of metal plug can occur quickly in the gas valve. The present invention is concerned with manufacturing of plastic plug instead of metal plug.

In present days, there are Standards about test and use case of gas valve in the world (For example EN 1106, EN 125, EN 126 etc.). Every gas valve manufacturers make tests on gas valves with these Standards and determines reliability and safety of the gas valves. According to these standards the cycle lifetime of the product is 40000 for domestic cookers in TS EN 1106 standard. After 40000 cycles, there mustn't be gas leakage in the valve. Moreover, 5000 lifetime cycle test is performed under condition of 160°C. Furthermore, according to the standards, the highest gas leakage rate can be divided into two groups: Inlet leakage and outlet leakage. The acceptable inlet and outlet leakage is 20*cm*³/*h*. In this Standard, it is stated about strength of the elastomeric on the valve. According to these standards, elastomeric used on the gas valve must resist lubricant, gas, corrosion, moisture under stated conditions in the standard.

Valve body and plug is made from brass and aluminum for gas valves to resist hard conditions. After plug is exposed to complicated and sensitive machining, valve body and plug must be cleaned very carefully. Otherwise, there can be gas leakage due to burr and similar particles inside the valve. Sometimes, these particles can be so small to unable to see the particles. However, they can be noticed during the leakage test and after assembly of the valve. The valve cannot be complete the cycle lifetime as stated in the standard unless there is a good lubrication between the valve body and the plug during manufacturing. Moreover, there will be corrosion on the valve body and on the plug due to friction between two metals and so, there will be gas leakage. This can cause a big hazard in domestic furnaces and ovens. As a result, there can be gas poisoning, burns on skin or fire in buildings, explosions due to gas pressure. It is obvious that gas valve has a great importance for human life. The changes, improvements and progresses of valve should be done for protection of human life. All valves must be manufactured at least in today's standards. However, these types of processes don't be done very much for metal-metal working gas valves. We come up against corrosion of these two metals.

Use of very good bearing material which is plastic and other non metal materials instead of the plug inside the gas valve haven't been considered until today. So, the invention is new in this subject. A plastic which can work under hard conditions, haven't been considered to be used until today. For this reason, a solution is improved and great success is achieved over the standard by use of plastic plug inside the gas valve.

Another main topic is the manufacturing method of plastic that can resist high test conditions by injection. So, the plug is improved that can be used directly without any machining process. However, some design modifications are done on the plug that is inside the valve to provide directly plastic injection manufacturing method. Design modifications don't prevent working of gas valve.

### PRIOR ART

The patent registered on behalf of George H. Blume, numbered US 5431186 and received on 25 July 1994 is concerned with the use of plastic material which decreases manufacturing cost and time at high level, has a similar steel valve house design and has same strength as steel and more lifetime. It is stated that valve house is preferably made from Delrin or nylon/KEVLAR composite material. However, this invention is generally used for pumping of corrosive fluid. To solve this problem, a plastic is chosen according to some criterions like having a long lifetime and resisting corrosion. Also, in our invention, plastic material must have a heat resistance and dimensional stability under heat. In present invention, mentioned manufacturing of steel valve house seems parallel to our invention. By change of this type of material, profit is gained in total cost due to time decrease of manufacturing, cost decrease of employee and assembly and taking cheap stuff.

The patent registered on behalf of Kamatics Corporation Company, numbered US 4717268 and received on 03 January 1984 is concerned with housing member that is made from internal and external rings. In this technical field, a new technical is mentioned. This technical is improved by utilizing the feature that is self-lubricating of plastics. In this invention, use of stiffened high carbon steel or stainless steel is mentioned before the state of the art. A high corrosion resistance is obtained by using plastic material instead of state of the art.

### THE AIMS OF THE INVENTION

The object of the invention is to manufacture plastic plug, which has enough mechanical and thermal resistance according to minimum gas valve standards to solve technical problem mentioned above. This material preferably can be chosen from engineering plastics or high performance plastics. These types of plastics provide desired mechanical and thermal resistance in valves. For example, these types of plastics can be used: High performance polyimide resin or PTFE (Politetrafloretilen) plastics commercially named Teflon, Fluon or Hostaflon TF or polyimide resin having graphite between%5 and %30 or teflon between %5 and %30, or plastic materials having both of them, polyster material having density between 1,44 and 1,48 *glcm³* and melting point at 480 °C marketed by Carborundum Co. Company commercially named Ekanol, polyarly sulfone having density nearly 1,36 *glcm³* and melting point at 287°C marketed by Phillips Petroleum Company commercially named Ryton, polytetrafluoroethylene having a density nearly 1,34 *g*/*cm*³ and melting point at 287 °C marketed by commercially named Polymer 360-3M Astrel 360, polyimide having density nearly between 1,41 and 1,43 *glcm*³ and not having a melting point and resisting until 360 °C marketed by DuPont Company commercially named Vespel.

Another object of the invention is to increase reliability and safety of the gas valve.

Another object of the invention is to provide high quality manufacture by eliminating problems that can occur during valve manufacture.

Another object of the invention is to work at desired standard conditions without using the lubricant which is used between the valve house and plug during valve manufacture.

Another object of the invention is to spin the valve with less force than standard minimum value 0,2Nm by using plastic material on the plug.

Another object of the invention is the decrease of density inside the plug due to material change and decrease of total mass.

Another object is to provide high quality manufacture without using machining method and rapid manufacture due to use of plastic material on the plug. Moreover, there will be no energy loss and pollution at machining due to not using traditional methods.

The structural and characteristic features and advantages of the present invention will become apparent from a careful reading of the detailed explanations of the figures below. For this reason, estimations should be done according to these figures and detailed explanations.

### BRIEF EXPLANATION OF FIGURES

Figure 1, perspective view of safety gas valve
Figure 2, perspective view of plastic plug which is used in safety gas valve
Figure 3, another perspective view of plastic plug which is used in safety gas valve
Figure 4, perspective view of the non safety gas valve
Figure 5, perspective view of plastic plug which is used in non safety gas valve
Figure 6, another perspective view of plastic plug which is used in non safety gas valve

### REFERENCE SIGN LIST

- 1.: Safety gas valve
- 2.: Plug
2.1. Longitudinal channel
2.2. Hole on the plug
- 3.: Non safety gas valve
- 4.: Gas valve body
- 5.: Valve stem
- 6.: Cap
- 7.: Bolt

### DETAILED EXPLANATION OF THE INVENTION

Other features and additional advantages of the invention will be better understood with the explanations below. Features of the invention will be more clearly understood with lots of examples and references of attached figures.

In this invention the components of the gas valve are gas valve body(4), plug which guides to gas transmission(2), valve stem(5) which provides opening and closing of the plug(2), cap(6) which makes housing to valve stem(5) and bolt(7).

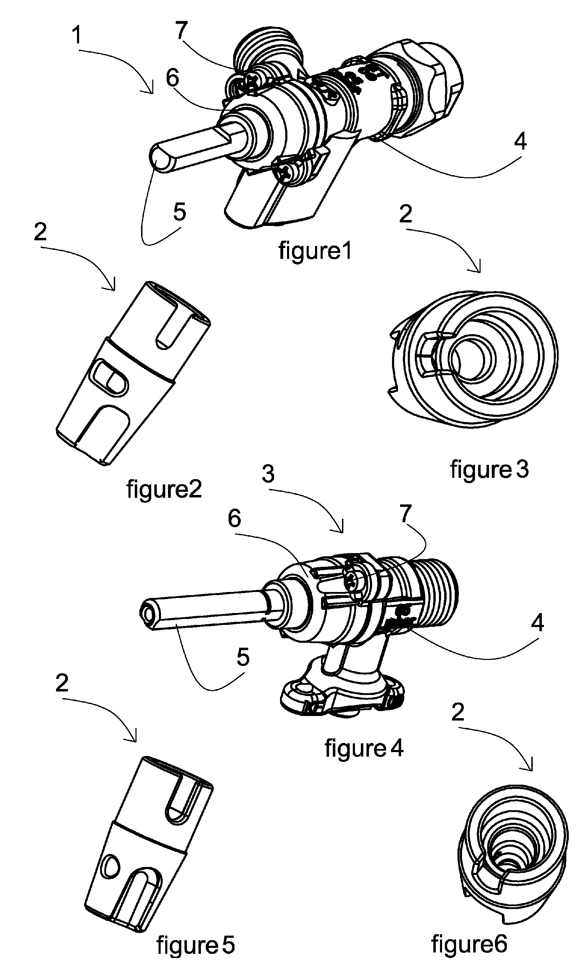

The plastic plug inside the gas valve is shown in figure 1 and 4. The plastic plug design is seen inside the safety gas valve(1) illustrated in figure 1. By means of this design, the plug(2) can be easily manufactured by injection method. In similar way, perspective view of the non safety gas valve(3) is shown in figure 4. The plastic plug(2) design inside the non safety valve(3) is shown in figure 4. By means of this design, the plug(2) can be manufactured easily with plastic injection method.

To provide complete gas transition there is a longitudinal channel(2.1) toward pattern for removing the plug(2) during the pattern injection. Complete gas transition is provided by the longitudinal channel(2.1). In similar way, there is a hole on the plug(2.2) to provide half gas transition. This hole(2.2) can be removed easily by core method during plastic injection manufacture.

The main feature of the plug is to be manufactured easily by plastic injection and plastic manufacture methods and its own design. The design can be modified according to gas direction and flow rate by gas valve manufacturers and can be adapted to other methods. Plugs which are manufactured by different designs such as plastic injection method or other plastic manufacture methods, doesn't exceed the intention content. It is the object of the invention to manufacture a gas valve over the desired standards by changing materials and provide minimum energy consumption.

This application of protected content is explained in claims and it cannot be limited with the explanations as mentioned above. In technical case study, it is obvious that an expert can change components formally and can use similar structures with similar purposes to other application fields. So, like these types of developments will be devoid of improvement criteria.

The invention is appropriate with all domestic cooker gas valves.

## Claims

1. The invention relates to a gas valve having at least one gas valve body(4), valve stem(5) spinning the valve plug(2) and the plug providing closing and opening of the valve and also relates to the plug material which is plastic providing enough mechanical and thermal resistance at gas valve standards.
